# EUROPÄISCHE PATENTSCHRIFT

(11) **EP 2 788 098 B1**
(45) Veröffentlichungstag und Bekanntmachung des Hinweises auf die Patenterteilung: **25.11.2015**
(21) Anmeldenummer: 12791752.4
(22) Anmeldetag: 26.11.2012
(51) Int. Cl.: B01D 17/02, B01D 21/24

(54) **DEKANTER**
DECANTER
DÉCANTEUR

(30) Priorität: 08.12.2011 DE 102011087966
(43) Veröffentlichungstag der Anmeldung: 15.10.2014
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2012/073609
(87) Internationale Veröffentlichungsnummer: WO 2013/083424

(56) Entgegenhaltungen:
- WO-A1-2008/014856
- DE-A1- 4 409 375
- US-B1- 6 287 460

## Beschreibung

Die Erfindung betrifft einen Dekanter nach dem Oberbegriff des Patentanspruchs 1.

Ein solcher Dekanter ist beispielsweise aus der WO 2008/014856 A1 bekannt. Bei dem bekannten Dekanter ist an einem Abführrohr nach Art eines T-Stücks ein Aufnahmerohr angebracht. Das Abführ- und das Aufnahmerohr sind aus massivem Stahl hergestellt.

Der bekannte Dekanter weist ein hohes Eigengewicht auf. Im praktischen Einsatz ist es überdies erforderlich, den Dekanter aus einer in den Überstand eintauchenden Position in eine angehobene Position oberhalb des Überstands zu verschwenken. Dabei ist insbesondere das Aufnahmerohr zunächst mit Überstand gefüllt. Bei einer häufig auftretenden unterschiedlichen Füllung der beiden Äste des Aufnahmerohrs neigt sich der schwerere Ast nach unten. Infolgedessen fließt Überstand vom anderen Ast nach, was zu einer weiteren Schrägstellung des Aufnahmerohrs führt. Es kommt insgesamt zu einer unerwünschten Verwindung des Dekanters. - Um dem entgegenzuwirken, verwendet man nach dem Stand der Technik besonders stabile Schwenklagerkonstruktionen, ein verwindungssteifes Abführrohr sowie eine besonders leistungsfähige Vorrichtung zum Anheben bzw. Absenken des Dekanters. Die vorgenannten Maßnahmen sind aufwändig.

Aufgabe der Erfindung ist es, die Nachteile nach dem Stand der Technik zu beseitigen. Es soll insbesondere ein Dekanter angegeben werden, dessen Stabilität verbessert ist. Nach einem weiteren Ziel der Erfindung soll der Dekanter mit einem verringerten Kostenaufwand herstell- und betreibbar sein. Diese Aufgabe wird durch die Merkmale des Anspruchs 1 gelöst. Zweckmäßige Ausgestaltungen der Erfindung ergeben sich aus den Merkmalen der Ansprüche 2 bis 14.

Nach Maßgabe der Erfindung ist vorgesehen, dass das Aufnahmerohr ein aus Blech hergestelltes Kantrohr ist. - Die Herstellung eines Kantrohrs aus Blech erfordert einen relativ geringen Aufwand. Überraschenderweise ist ein solches Kantrohr ausreichend stabil, um den beim Betrieb eines Dekanters auftretenden hohen Kräften zu widerstehen. Wegen des verringerten Gewichts des erfindungsgemäß vorgeschlagenen Aufnahmerohrs kann eine weniger aufwändig herzustellende Vorrichtung zum Anheben und Absenken des Dekanters verwendet werden. Nach einer vorteilhaften Ausgestaltung ist das Abführrohr ein aus Blech hergestelltes weiteres Kantrohr. Der Dekanter kann in Abkehr vom Stand der Technik also auch insgesamt aus Blech hergestellt sein. Ein solcher Dekanter ist besonders leichtgewichtig. Er lässt sich einfach transportieren, montieren und mit einer weniger aufwändig gestalteten Vorrichtung zum Anheben und Absenken betreiben.

Vorteilhafterweise ist die Abzieheinrichtung bezüglich einer durch das Aufnahmerohr verlaufenden Mittelebene im Wesentlichen symmetrisch ausgebildet. Das Kantrohr und vorteilhafterweise auch das weitere Kantrohr sind aus mehreren gekanteten, durch Nieten miteinander verbundenen Edelstahlblechelementen mit einer Dicke im Bereich von 0,4 bis 3,5 mm gebildet.

Solche Blechteile lassen sich einfach und kostengünstig herstellen. Überraschenderweise hat es sich gezeigt, dass bereits eine Verbindung der Blechteile durch Nieten eine ausreichende Stabilität des Kantrohrs bzw. des weiteren Kantrohrs gewährleistet. Eine solche Verbindung kann einfach und kostengünstig hergestellt werden.

Nach einer vorteilhaften Ausgestaltung nimmt eine Querschnittsfläche des Kantrohrs beidseits der Mittelebene ab. D. h. ein Querschnitt des Aufnahmerohrs verjüngt sich jeweils hin zu seinen beiden freien Enden. Damit kann über die gesamte Länge des Aufnahmerohrs hinweg eine gleichmäßige Strömungsgeschwindigkeit des Überstands im Aufnahmerohr erreicht werden. Verwirbelungen durch eine Änderung der Strömungsgeschwindigkeit über die Länge des Aufnahmerohrs hinweg können reduziert oder vermieden werden. Im Vergleich zu dem nach dem Stand der Technik bekannten Aufnahmerohr mit konstanter Querschnittsfläche kann pro Zeiteinheit eine größere Menge an Überstand durch das erfindungsgemäße Aufnahmerohr geführt werden.

Nach einer weiteren Ausgestaltung der Erfindung weist das Kantrohr eine Vielzahl von Durchbrüchen zum Durchtritt des Überstands auf. Dabei sind die Durchbrüche zweckmäßigerweise in zumindest einer senkrecht auf der Mittelebene stehenden Durchbruchsebene angeordnet. Das vorgeschlagene Vorsehen einer Vielzahl nebeneinander angeordneter Durchbrüche trägt dazu bei, dass der Überstand zunächst etwa parallel zu einer Achse der zweckmäßigerweise kreisrunden oder rechteckigen Durchbrüche in das Aufnahmerohr einströmt. Auch das trägt zu einer Vergleichmäßigung der Strömung innerhalb des Aufnahmerohrs und damit zu einem verbesserten Durchsatz bei.

Nach einer weiteren Ausgestaltung ist zur Vergleichmäßigung einer Strömungsgeschwindigkeit innerhalb des Kantrohrs zumindest ein Strömungswiderstandselement, vorzugsweise ein Blech oder Lochblech, vorgesehen. Das Blech oder Lochblech ist zweckmäßigerweise im Bereich der Mittelebene angebracht. Es können auch beidseits der Mittelebene, vorzugsweise in symmetrischer Anordnung, Bleche oder Lochbleche vorgesehen sein. Das Vorsehen des zumindest einen Blechs oder Lochblechs wirkt einer vom einen Ast des Aufnahmerohrs zum anderen Ast des Aufnahmerohrs gerichteten Strömung entgegen. Beim Herausheben des Aufnahmerohrs aus dem Überstand kann damit einer unerwünschten Schrägstellung der Abzieheinrichtung entgegengewirkt werden.

Zweckmäßigerweise ist an einer Außenseite des Kantrohrs eine aus gekantetem Blech hergestellte Abweiseinrichtung angebracht. Eine solche Abweiseinrichtung dient dem Zurückhalten von Schmutz und wirkt einer Verstopfung der stromabwärts nachgeordneten Durchbrüche entgegen.

Die Abweiseinrichtung ist vorteilhafterweise mittels Abstandshalter in einem vorgegebenen Abstand gegenüber den Durchbrüchen angebracht. Der vorgegebene Abstand ist zweckmäßigerweise gleich oder kleiner einem Durchmesser der Durchbrüche. Sofern ein Durchmesser der Durchbrüche sich vom freien Ende eines Asts des Aufnahmerohrs hin zur Mittelebene ändert, kann sich der vorgegebene Abstand der Abweiseinrichtung korrespondierend dazu ändern.

Nach einer weiteren Ausgestaltung ist die Abzieheinrichtung etwa mittig mit einem Anschlussstück zum Anschluss an das Abführrohr versehen. Das Anschlussstück dient dem Zusammenführen des durch die beiden Äste des Aufnahmerohrs strömenden Überstands und dessen Weiterleitung in das Abführrohr. Ferner ist das Anschlussstück so ausgestaltet, dass damit die Abzieheinrichtung lösbar am Abführrohr angebracht ist, d. h. zu Wartungs- oder Reparaturzwecken vom Abführrohr demontiert werden kann.

Zweckmäßigerweise ist das Anschlussstück in das Kantrohr integriert. Das Anschlussstück kann ebenfalls aus gekantetem Blech hergestellt sein. Es ist in diesem Fall zweckmäßigerweise kastenförmig ausgestaltet.

Unter dem Begriff "Abzieheinrichtung" wird erfindungsgemäß insgesamt die am Abführrohr nach Art eines T-Stücks angebrachte Einrichtung verstanden, welche das Aufnahmerohr, die Abweiseinrichtung samt Abstandshalter, das Anschlussstück usw. umfasst.

Nach einer weiteren Ausgestaltung ist das Kantrohr und/oder das weitere Kantrohr ein 5-, 6-, 7- oder 8-Kantrohr.

Zweckmäßigerweise liegt die Dicke des Blechs im Bereich von 1,0 bis 2,0 mm.

Nachfolgend wird ein Ausführungsbeispiel der Erfindung anhand der Zeichnungen näher erläutert. Es zeigen:
- Fig. 1: eine perspektivische Ansicht eines Dekanters nach dem Stand der Technik,
- Fig. 2: eine perspektivische Ansicht einer ersten Abzieheinrichtung,
- Fig. 3: eine Explosionsansicht gemäß Fig. 2,
- Fig. 4: eine weitere Explosionsansicht gemäß Fig. 2,
- Fig. 5: eine Seitenansicht der ersten Abzieheinrichtung gemäß Fig. 2,
- Fig. 6: eine perspektivische Ansicht einer zweiten Abzieheinrichtung mit Abführrohr und
- Fig. 7: eine Explosionsansicht gemäß Fig. 6.

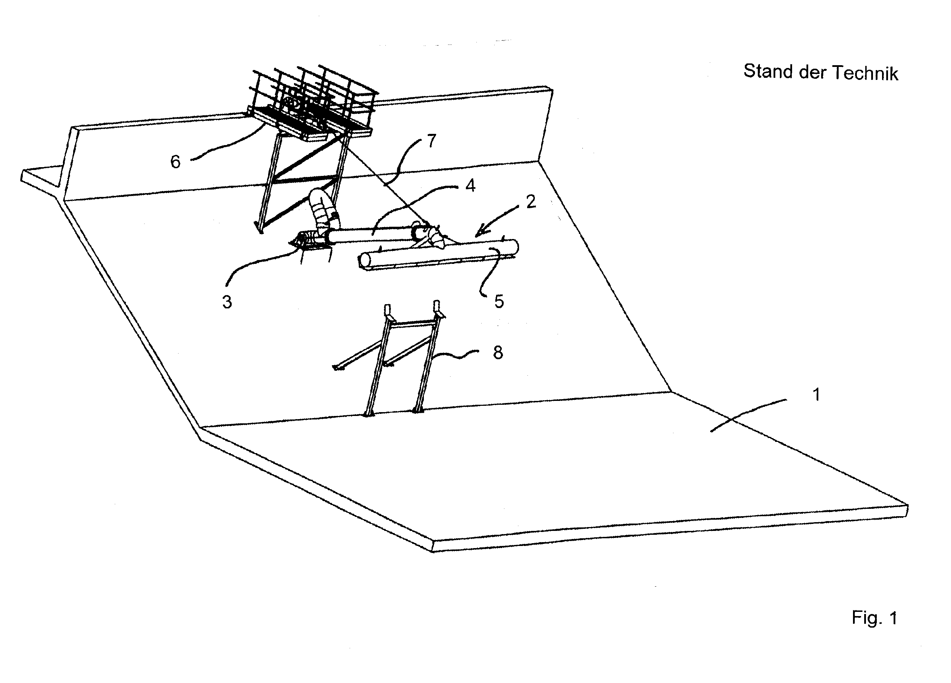

In Fig. 1 ist in einem schematisch angedeuteten Klärbecken 1 ein allgemein mit dem Bezugszeichen 2 bezeichneter Dekanter schwenkbar um ein Schwenklager 3 angebracht. Der Dekanter 2 umfasst ein Abführrohr 4. Das eine Ende des Abführrohrs 4 ist schwenkbar im Schwenklager 3 gehalten. Am anderen Ende des Abführrohrs 4 ist nach Art eines T-Stücks eine Abzieheinrichtung 5 angebracht. Mit dem Bezugszeichen 6 ist eine Hubvorrichtung zum Anheben bzw. Absenken des Dekanters 2 bezeichnet. Die Hubvorrichtung 6 umfasst beispielsweise eine Winde mit einem Seil 7, dessen Ende im Bereich der Abzieheinrichtung 5 befestigt ist. Mit dem Bezugszeichen 8 ist eine Abstützeinrichtung zum Abstützen des Dekanters 2 in einer Ruheposition bezeichnet.

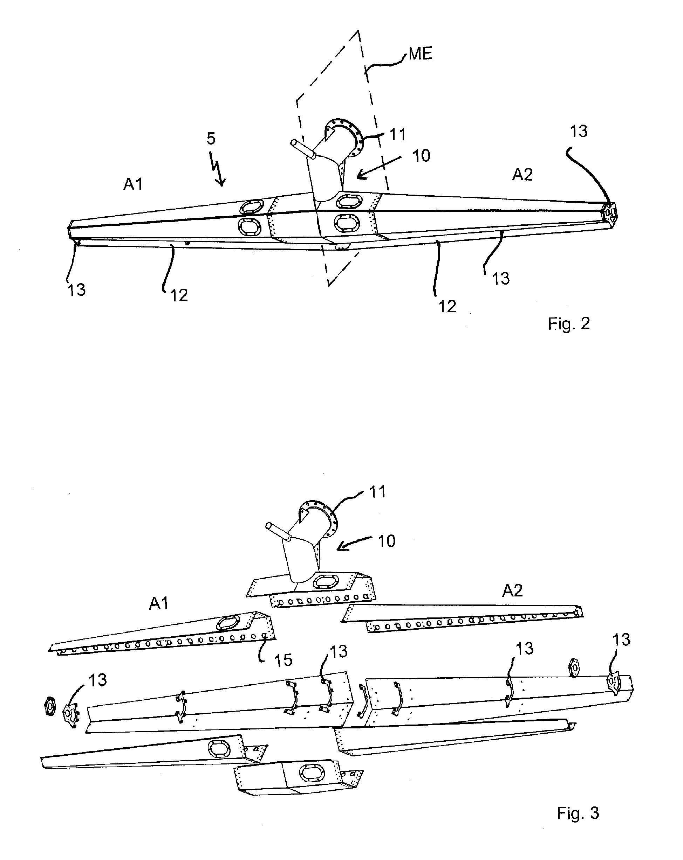

Die Fig. 2 bis 5 zeigen ein Ausführungsbeispiel einer ersten erfindungsgemäßen Abzieheinrichtung 5. Ein als Kantrohr ausgebildetes erstes Aufnahmerohr 9 weist zwei Äste A1, A2 auf, welche sich beidseits eines in das erste Aufnahmerohr 9 integrierten ersten Anschlussstücks 10 erstrecken. Das erste Anschlussstück 10 kann einen Flansch 11 zum Anschluss an ein herkömmliches Abführrohr 4 aufweisen. Wie insbesondere aus Fig. 2 ersichtlich ist, verjüngt sich eine Querschnittsfläche des Aufnahmerohrs 9 beidseits einer mit dem Bezugszeichen ME bezeichneten Mittelebene jeweils in Richtung der freien Enden der beiden Äste A1, A2. Eine aus einem gekanteten Blech hergestellte Abweiseinrichtung 12 ist mittels mehrerer Abstandshalter 13, welche ebenfalls aus Blech hergestellt sein können, am ersten Aufnahmerohr 9 angebracht. Die Abzieheinrichtung 5 ist bezüglich der Mittelebene ME - abgesehen von fakultativ vorgesehenen Revisionsöffnungen - symmetrisch ausgebildet.

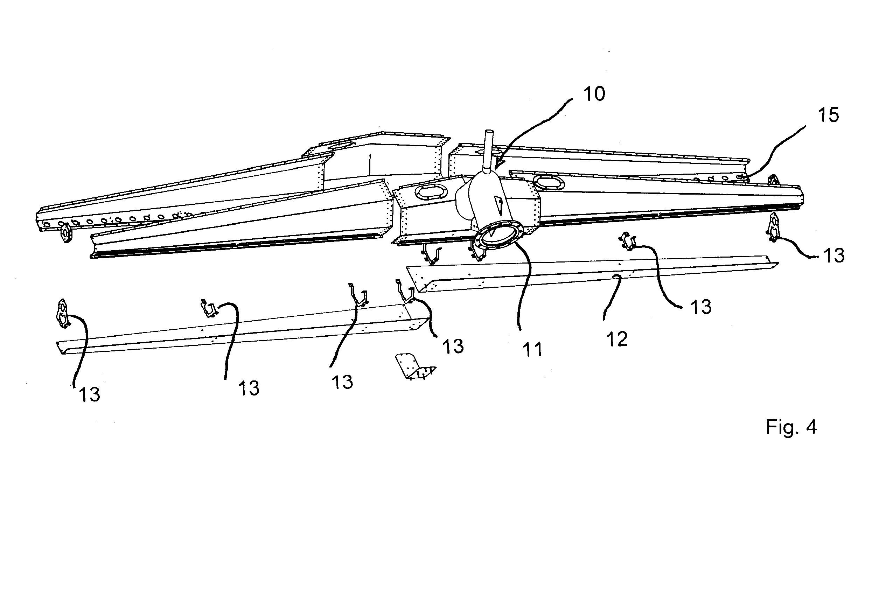

Wie insbesondere aus den Fig. 3 und 4 ersichtlich ist, sind das erste Aufnahmerohr 9 sowie ein darin integrierter Abschnitt 14 des ersten Anschlussstücks 10 aus gekanteten Blechelementen hergestellt. Die Blechelemente weisen jeweils Durchbrüche 15 auf, welche in einer Reihe nebeneinander angeordnet sind.

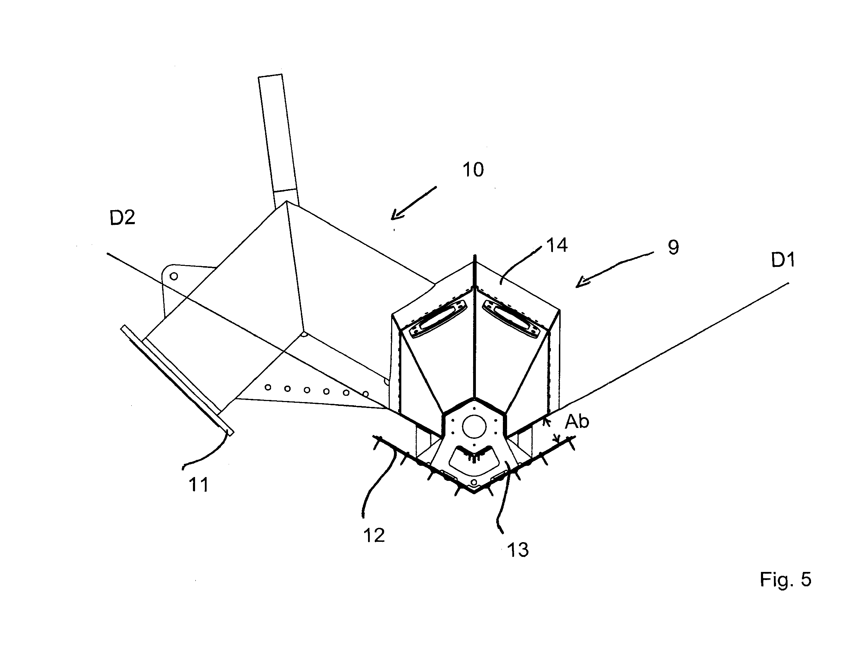

Wie insbesondere in Zusammensicht mit Fig. 5 ersichtlich ist, ergibt sich durch das Verbinden der Blechelemente ein 6-Kantrohr mit zwei Reihen an Durchbrüchen 15, welche gegenüberliegend der aus einem gekanteten Blech gebildeten Abweiseinrichtung 12 angeordnet sind. Dabei liegen die Durchbrüche 15 in Durchbruchebenen D1, D2, welche senkrecht zur Mittelebene ME verlaufen. Die Mittelebene ME entspricht in Fig. 5 der Papierebene. Ein Abstand Ab zwischen der Abweiseinrichtung 12 und den Durchbrüchen 15 ist vorgegeben und ist vorzugsweise kleiner oder gleich einem Durchmesser der Durchbrüche 15.

Die in den Fig. 2 bis 5 gezeigte erste Abzieheinrichtung 5 ist zweckmäßigerweise aus gekanteten Edelstahlblechelementen mit einer Dicke im Bereich von 0,4 bis 3,5 mm, vorzugsweise 1,0 bis 2,0 mm, hergestellt. Die Edelstahlblechelemente sind vorteilhafterweise mittels Nieten miteinander verbunden.

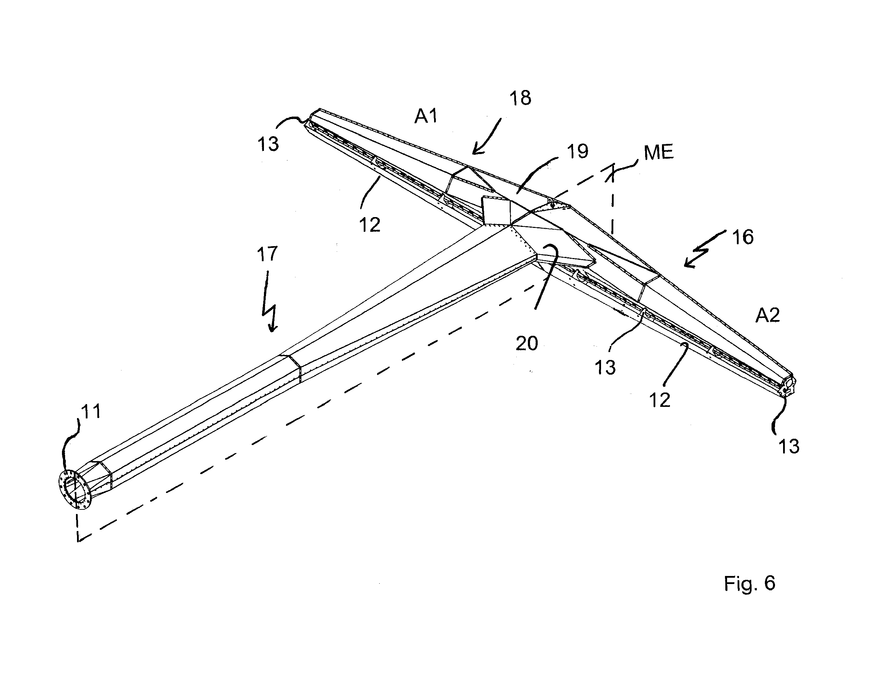

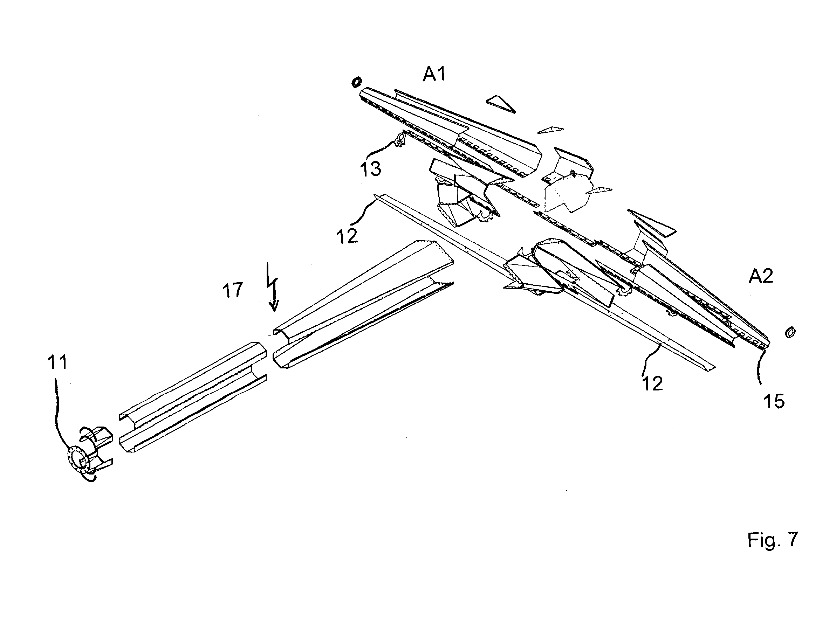

Die Fig. 6 und 7 zeigen eine zweite Abzieheinrichtung 16, welche mit einem aus einem weiteren Kantrohr gebildeten gekanteten Abführrohr 17 fest verbunden ist. Die zweite Abzieheinrichtung 16 ist ähnlich der ersten Abzieheinrichtung 5 aus gekanteten Blechen hergestellt. Sie weist ein als Kantrohr ausgebildetes zweites Aufnahmerohr 18 mit zwei sich in ihrem Querschnitt zu deren freien Enden hin verjüngenden Ästen A1, A2 auf. Die beiden Äste A1, A2 sind mit einem zweiten Anschlussstück 19 verbunden, welches wiederum aus gekanteten Blechelementen hergestellt ist. Das zweite Anschlussstück 19 weist einen Anschlussabschnitt 20 auf, der im Gegensatz zur ersten Abzieheinrichtung 5 aus gekanteten Blechen hergestellt ist. Der Anschlussabschnitt 20 ist ähnlich eines Pyramidenstumpfs ausgebildet. Eine große Grundfläche des Pyramidenstumpfs mündet in das zweite Anschlussstück 19, eine kleine Grundfläche des Pyramidenstumpfs mündet in das gekantete Abführrohr 17. Damit ergibt sich eine besonders verwindungssteife Anbringung des zweiten Aufnahmerohrs 18 am gekanteten Abführrohr 17.

Das gekantete Abführrohr 17 ist, wie insbesondere aus Fig. 7 ersichtlich ist, wiederum aus mehreren gekanteten Blechelementen zusammengesetzt. Es weist einen sechseckigen Umriss auf, welcher bezüglich der Mittelebene ME symmetrisch ausgebildet ist. Am freien Ende des gekanteten Abführrohrs 17 ist der Flansch 11 vorgesehen, welcher mit einem herkömmlichen Schwenklager 3 verbunden werden kann.

Obwohl es in den Figuren nicht gezeigt ist, können innerhalb des Aufnahmerohrs 9 geeignet angeordnete Strömungsleitbleche oder Lochbleche angebracht sein. Insbesondere kann im Bereich der Mittelebene ME ein Lochblech vorgesehen sein. Es können auch beidseits der Mittelebene ME parallel dazu verlaufende Lochbleche vorgesehen sein.

### Bezugszeichenliste

- 1: Klärbecken
- 2: Dekanter
- 3: Schwenklager
- 4: Abführrohr
- 5: erste Abzieheinrichtung
- 6: Hubvorrichtung
- 7: Seil
- 8: Stützeinrichtung
- 9: erstes Aufnahmerohr
- 10: erstes Anschlussstück
- 11: Flansch
- 12: Abweiseinrichtung
- 13: Abstandshalter
- 14: Abschnitt
- 15: Durchbruch
- 16: zweite Abzieheinrichtung
- 17: gekantetes Abführrohr
- 18: zweites Aufnahmerohr
- 19: zweites Anschlussstück
- 20: Anschlussabschnitt

- A1: erster Ast
- A2: zweiter Ast
- Ab: Abstand
- D1: erste Durchbruchebene
- D2: zweite Durchbruchebene
- ME: Mittelebene

## Patentansprüche

1. Dekanter (2) zum Abtrennen eines über einem Klärschlamm stehenden Überstands in einem Klärbecken (1), bei dem am einen Ende eines Abführrohrs (4, 17) eine Abzieheinrichtung (5, 16) mit einem Aufnahmerohr (9, 18) angebracht ist, welches sich nach Art eines T-Stücks etwa senkrecht zum Abführrohr (4, 17) erstreckt, wobei das andere Ende des Abführrohrs (4, 17) schwenkbar in einem Schwenklager (3) gehalten ist,
**dadurch gekennzeichnet, dass**
das Aufnahmerohr (9, 18) ein Kantrohr ist, welches aus mehreren miteinander durch Nieten verbundenen Edelstahlblechelementen mit einer Dicke im Bereich von 0,4 bis 3,5 mm gebildet ist.

2. Dekanter (2) nach Anspruch 1, wobei das Abführrohr (17) ein aus Blech hergestelltes weiteres Kantrohr ist.

3. Dekanter (2) nach Anspruch 2 oder 3, wobei die Abzieheinrichtung (5, 16) bezüglich einer durch das Aufnahmerohr (9, 18) verlaufenden Mittelebene (ME) im Wesentlichen symmetrisch ausgebildet ist.

4. Dekanter (2) nach einem der vorhergehenden Ansprüche, wobei das weitere Kantrohr aus mehreren gekanteten, vorzugsweise durch Nieten miteinander verbundenen, weiteren Edelstahlblechelementen gebildet ist.

5. Dekanter (2) nach einem der vorhergehenden Ansprüche, wobei eine Querschnittsfläche des Kantrohrs beidseits der Mittelebene (ME) abnimmt.

6. Dekanter (2) nach einem der vorhergehenden Ansprüche, wobei das Kantrohr eine Vielzahl von Durchbrüchen (15) zum Durchtritt des Überstands aufweist.

7. Dekanter (2) nach einem der vorhergehenden Ansprüche, wobei die Durchbrüche (15) in zumindest einer senkrecht auf der Mittelebene (ME) stehenden Durchbruchebene (D1, D2) angeordnet sind.

8. Dekanter (2) nach einem der vorhergehenden Ansprüche, wobei zur Vergleichmäßigung einer Strömungsgeschwindigkeit innerhalb des Kantrohrs zumindest ein Strömungswiderstandselement, vorzugsweise ein Lochblech, vorgesehen ist.

9. Dekanter (2) nach einem der vorhergehenden Ansprüche, wobei an einer Außenseite des Kantrohrs eine aus gekantetem Blech hergestellte Abweiseinrichtung (12) angebracht ist.

10. Dekanter (2) nach einem der vorhergehenden Ansprüche, wobei die Abweiseinrichtung (12) mittels Abstandshaltern (13) in einen vorgegebenen Abstand (Ab) gegenüber den Durchbrüchen (15) angebracht ist.

11. Dekanter (2) nach einem der vorhergehenden Ansprüche, wobei die Abzieheinrichtung (5) etwa mittig mit einem Anschlussstück (10, 19) zum Anschluss an das Abführrohr (4, 17) versehen ist.

12. Dekanter (2) nach einem der vorhergehenden Ansprüche, wobei das Anschlussstück (10, 19) in das Kantrohr integriert ist.

13. Dekanter (2) nach einem der vorhergehenden Ansprüche, wobei das Kantrohr und/oder das weitere Kantrohr ein 5-, 6-, 7- oder 8-Kantrohr ist.

14. Dekanter (2) nach einem der vorhergehenden Ansprüche, wobei die Edelstahlblechelemente eine Dicke im Bereich von 1,0 bis 2,0 mm aufweisen.

15. Dekanter nach einem der Ansprüche 4 bis 14, wobei die weiteren Edelstahlblechelemente eine Dicke im Bereich vom 0,4 bis 3,5 mm, vorzugsweise im Bereich von 1,0 bis 2,0 mm, aufweisen.

## Claims

1. A decanter (2) for separating a supernatant arranged above a sludge in a settlement tank (1), wherein a withdrawal device (5, 16) with a receiving pipe (9, 18), which extends in the manner of a T-piece approximately perpendicular to a discharge pipe (4, 17), is attached to one end of the discharge pipe (4, 17), wherein the other end of the discharge pipe (4, 17) is held pivotably in a pivot bearing (3),
**characterised in that**
the receiving pipe (9, 18) is a polygonal pipe which is produced from a plurality of high-grade steel plate elements having a thickness in a range from 0.4 to 3.5 mm which are interconnected by rivets.

2. The decanter (2) according to Claim 1, wherein the discharge pipe (17) is a further polygonal pipe produced from sheet metal.

3. The decanter (2) according to Claims 2 or 3, wherein the withdrawal device (5, 16) is formed substantially symmetrically about a central plane (ME) running through the receiving pipe (9, 18).

4. The decanter (2) according to one of the preceding claims, wherein the further polygonal pipe is formed from a plurality of further angled high-grade steel plate elements, preferably interconnected by rivets.

5. The decanter (2) according to one of the preceding claims, wherein a cross-sectional area of the polygonal pipe reduces on either side of the central plane (ME).

6. The decanter (2) according to one of the preceding claims, wherein the polygonal pipe has a multiplicity of apertures (15) for passage of the supernatant.

7. The decanter (2) according to one of the preceding claims, wherein the apertures (15) are arranged in at least one aperture plane (D1, D2) disposed perpendicular to the central plane (ME).

8. The decanter (2) according to one of the preceding claims, wherein at least one flow resistance element, preferably a perforated sheet metal plate, is provided within the polygonal pipe for homogenisation of a flow rate.

9. The decanter (2) according to one of the preceding claims, wherein a deflection device (12) produced from angled sheet metal is attached to an outer face of the polygonal pipe.

10. The decanter (2) according to one of the preceding claims, wherein the deflection device (12) is attached by means of spacers (13) at a predefined distance (Ab) from the apertures (15).

11. The decanter (2) according to one of the preceding claims, wherein the withdrawal device (5) is provided approximately centrally with a connection piece (10, 19) for connection to the discharge pipe (4, 17).

12. The decanter (2) according to one of the preceding claims, wherein the connection piece (10, 19) is integrated into the polygonal pipe.

13. The decanter (2) according to one of the preceding claims, wherein the polygonal pipe and/or the further polygonal pipe is/are a 5-sided, 6-sided, 7-sided or 8-sided polygonal pipe.

14. The decanter (2) according to one of the preceding claims, wherein the high-grade steel plate elements having a thickness in the range from 1.0 to 2.0 mm.

15. The decanter (2) according to one of claims 4 to 14, wherein the further high-grade steel plate elements having a thickness in a range of 0.4 to 3.5 mm, preferably in a range of 1.0 to 2.0 mm.

## Revendications

1. Décanteur (2) permettant la séparation d'un surnageant se trouvant au-dessus de boues d'épuration dans un bassin d'épuration (1), sur lequel un dispositif de soutirage (5, 16) comportant un tube d'absorption (9, 18) est placé à une extrémité d'un tube de sortie (4, 17), ledit tube d'absorption s'étendant de manière approximativement perpendiculaire au tube de sortie (4, 17) de façon à former une pièce en T, l'autre extrémité du tube de sortie (4, 17) étant maintenue de manière à pivoter dans un palier pivotant (3),
**caractérisé en ce que**
le tube d'absorption (9, 18) est un tube carré qui est réalisé à partir de plusieurs éléments en tôle d'acier inoxydable reliés entre eux par des rivets d'une épaisseur dans une plage comprise entre 0,4 et 3,5 mm.

2. Décanteur (2) selon la revendication 1, en ce que le tube de sortie (17) est un autre tube carré réalisé en tôle.

3. Décanteur (2) selon la revendication 2 ou 3, en ce que le dispositif de soutirage (5, 16) par rapport à un plan médian (ME) passant par le tube d'absorption (9, 18) est réalisé en grande partie de manière symétrique.

4. Décanteur (2) selon l'une des revendications précédentes, en ce que l'autre tube carré est réalisé à partir de plusieurs autres éléments en tôle d'acier inoxydable pliés à arêtes vives, de préférence reliés entre eux par des rivets.

5. Décanteur (2) selon l'une des revendications précédentes, en ce qu'une surface de section du tube carré décroît des deux côtés du plan médian (ME).

6. Décanteur (2) selon l'une des revendications précédentes, en ce que le tube carré présente une pluralité d'ouvertures (15) pour le passage du surnageant.

7. Décanteur (2) selon l'une des revendications précédentes, en ce que les ouvertures (15) sont disposées dans au moins un plan d'ouverture (D1, D2) perpendiculaire au plan médian (ME).

8. Décanteur (2) selon l'une des revendications précédentes, en ce qu'au moins un élément de résistance à l'écoulement, de préférence une tôle perforée, est prévu pour l'homogénéisation d'une vitesse d'écoulement à l'intérieur du tube carré.

9. Décanteur (2) selon l'une des revendications précédentes, en ce qu'un dispositif déflecteur (12) réalisé en tôle pliée à arêtes vives est monté sur un côté extérieur du tube carré.

10. Décanteur (2) selon l'une des revendications précédentes, en ce que le dispositif déflecteur (12) est monté au moyen d'écarteurs (13) à une distance définie (Ab) par rapport aux ouvertures (15).

11. Décanteur (2) selon l'une des revendications précédentes, en ce que le dispositif de soutirage (5) est muni approximativement au centre d'une pièce de raccordement (10, 19) pour le raccordement au tube de sortie (4, 17).

12. Décanteur (2) selon l'une des revendications précédentes, en ce que la pièce de raccordement (10, 19) est intégrée dans le tube carré.

13. Décanteur (2) selon l'une des revendications précédentes, en ce que le tube carré et/ou l'autre tube carré est un tube à 5, 6, 7 ou 8 pans.

14. Décanteur (2) selon l'une des revendications précédentes, en ce que les éléments en tôle d'acier inoxydable présentent une épaisseur dans une plage comprise entre 1,0 et 2,0 mm.

15. Décanteur selon l'une des revendications 4 à 14, en ce que les autres éléments en tôle d'acier inoxydable présentent une épaisseur dans une plage comprise entre 0,4 et 3,5 mm, de préférence dans une plage comprise entre 1,0 et 2,0 mm.
